# NOUVEAU FASCICULE DE BREVET EUROPEEN

(11) **EP 3 313 643 B2**
(45) Date de publication et mention de la décision concernant l'opposition: **10.12.2025**
(45) Mention de la délivrance du brevet: 07.08.2019
(21) Numéro de dépôt: 16741353.3
(22) Date de dépôt: 22.06.2016
(51) Int. Cl.: B29C 49/64, B29C 49/06, B29K 67/00, B29L 31/00

(54) **PROCÉDÉ DE CHAUFFE HYBRIDE INFRAROUGE ET MICRO-ONDES D'ÉBAUCHES DE RÉCIPIENTS**
HYBRIDE MIKROWELLE UND INFRAROTVERFAHREN ZUR ERWÄRMUNG VON BEHÄLTERVORFORMLINGEN
HYBRID MICROWAVE AND INFRARED PROCESS FOR HEATING CONTAINER PARISONS

(30) Priorité: 26.06.2015 FR 1555953
(43) Date de publication de la demande: 02.05.2018
(73) Titulaire: Sidel Participations, 76930 Octeville-sur-Mer (FR)
(72) Inventeur: DUCLOS, Yves-Alban, 76930 Octeville-sur-Mer (FR); FEVRE, Sébastien, 76930 Octeville-sur-Mer (FR); LECOMTE, Frederic, 76930 Octeville-sur-Mer (FR)
(74) Mandataire: Sidel Group
(86) Numéro de dépôt international: PCT/FR2016/051526
(87) Numéro de publication internationale: WO 2016/207545

(56) Documents cités:
- JP-A- S63 307 928
- US-A- 4 147 487
- US-A1- 2012 326 345
- US-A1- 2013 193 622
- US-B2- 8 231 823

## Description

L'invention a trait à la fabrication des récipients (notamment bouteilles, flacons) à partir d'ébauches en matière plastique, par exemple en polytéréphtalate d'éthylène (PET).

Une ébauche peut être une préforme brute d'injection, ou un récipient intermédiaire issu d'une préforme ayant subi une ou plusieurs opérations non définitive(s). Dans ce qui suit, on suppose que les récipients sont formés directement à partir de préformes, bien qu'ils puissent l'être en passant par des récipients intermédiaires.

Classiquement, la fabrication d'un récipient comprend une étape de conditionnement thermique au cours de laquelle la préforme est chauffée à une température supérieure à la température de transition vitreuse de la matière (laquelle est d'environ 80°C pour le PET) suivie d'une étape de formage du récipient, par soufflage ou étirage soufflage de la préforme ainsi chauffée dans un moule à l'empreinte du récipient.

Traditionnellement, le conditionnement thermique de la préforme est réalisé au sein d'un four équipé de lampes à infrarouge (typiquement à halogène) devant lesquelles la préforme défile tout en étant entraînée en rotation.

Une fraction du rayonnement est absorbée par la matière de la préforme et, de l'agitation moléculaire provoquée par cette absorption, il résulte un dégagement de chaleur.

La chauffe infrarouge des préformes au moyen de lampes à infrarouge est très largement répandue, car sa mise en œuvre est relativement simple et maîtrisée. Son principal inconvénient est la faiblesse de son rendement, de l'ordre de 25% (rapport entre la puissance effectivement reçue par les préformes et la puissance électrique consommée).

Une autre technique de chauffe, connue pour l'instant à l'état de prototype, consiste à soumettre la préforme à un rayonnement micro-ondes, comme décrit dans le brevet américain US8231823 (Krones). Pour les récipients en PET, cette technique offre des rendements supérieurs à ceux de la chauffe infrarouge, notamment en raison de la plus grande perméabilité du PET aux micro-ondes. Il est indiqué, dans le brevet américain précité, que les préformes peuvent être soumises d'abord à un rayonnement infrarouge, puis aux micro-ondes (ou l'inverse). L'intérêt d'un tel procédé n'est toutefois pas révélé, pas plus que ses conditions opératoires précises.

Un objectif est d'améliorer l'efficacité de la chauffe des préformes afin d'en accroître le rendement et ainsi minimiser l'énergie électrique consommée, et afin aussi d'accélérer les cadences de production des récipients.

A cet effet, il est proposé, en premier lieu, un procédé selon la revendication 1.

Les micro-ondes amplifiant les différences de températures entre la (les) zone(s) froide(s) et la (les) zone(s) chaude(s), il est possible de procéder à une chauffe plus efficace des ébauches.

Diverses caractéristiques supplémentaires peuvent être prévues, selon les revendications dépendantes.

D'autres objets et avantages de l'invention apparaîtront à la lumière de la description d'un mode de réalisation, faite ci-après en référence aux dessins annexés dans lesquels :
la figure 1 est une vue schématique montrant une installation de fabrication de récipients à partir de préformes, qui comprend une unité primaire de chauffe à infrarouge des préformes, une unité
secondaire de chauffe à micro-ondes des préformes et une unité de formage des récipients à partir des préformes ;
la figure 2 est une vue en coupe d'une unité primaire de chauffe à infrarouge selon un premier mode de réalisation où les sources infrarouge sont des lampes ; sur cette figure est tracée, à gauche, une courbe de puissance électrique fournie aux lampes ;
la figure 3 est une vue en coupe d'une unité primaire de chauffe à infrarouge selon un deuxième mode de réalisation où les sources infrarouge sont des diodes laser ; sur cette figure est tracée, à gauche, une courbe de puissance d'émission des diodes laser ;
la figure 4 est une vue en coupe d'un poste de chauffe à micro-ondes équipant l'unité secondaire de chauffe ;
la figure 5 est une vue illustrant une préforme issue d'une chauffe combinée au cours de laquelle la préforme a été successivement exposée à des lampes à infrarouge puis aux micro-ondes ; on a représenté, au-dessus et en regard du corps de la préforme, les variations de température du corps, d'abord à l'issue de la chauffe primaire infrarouge (en trait fin), puis à l'issue de la chauffe secondaire micro-ondes (en trait plus épais) ;
la figure 6 est une vue similaire à la figure 5, qui illustre une préforme issue d'une chauffe combinée au cours de laquelle la préforme a été successivement exposée à des diodes laser puis aux micro-ondes ; on a représenté, au-dessus et en regard du corps de la préforme, les variations de température du corps, d'abord à l'issue de la chauffe primaire laser (en trait fin), puis à l'issue de la chauffe secondaire micro-ondes (en trait plus épais).

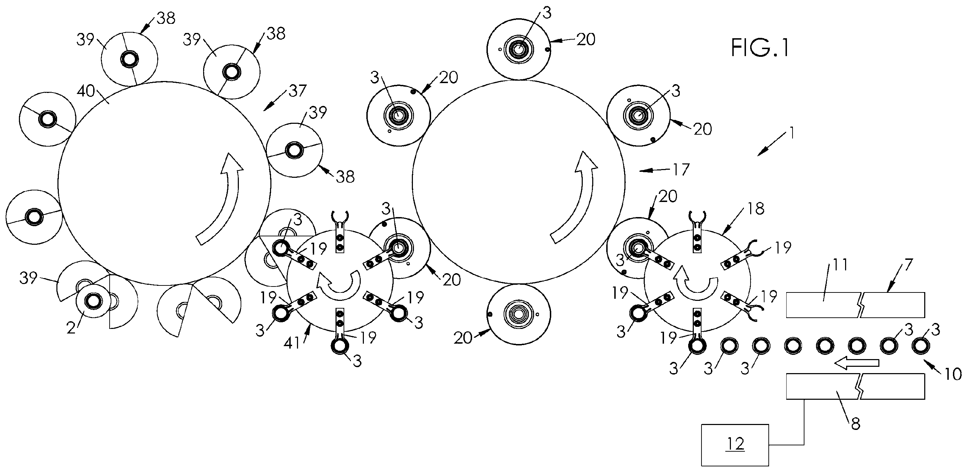

Sur la figure 1 est représentée une installation 1 pour la fabrication de récipients 2 à partir d'ébauches 3 en matière plastique, par ex. en PET (polytéréphtalate d'éthylène).

Les ébauches 3 sont ici des préformes brutes d'injection, mais il pourrait s'agir de récipients intermédiaires ayant subi une ou plusieurs opérations à partir de préformes brutes.

Chaque préforme 3 comprend un corps 4 sensiblement cylindrique de révolution autour d'un axe X principal, un col 5 qui s'étend à une extrémité supérieure du corps 4, et un fond 6 hémisphérique qui ferme le corps 4 à une extrémité inférieure de celui-ci, opposée au col 5.

Le col 5 possède sa forme finale, qui demeure inchangée au cours du processus de fabrication du récipient 2.

La matière plastique dans laquelle est réalisée chaque préforme 3 est de préférence un polyester, notamment du PET (polytéréphtalate d'éthylène), qui offre une bonne rigidité mécanique et de bonnes qualités de transparence.

Comme illustré sur la figure 1 , l'installation 1 comprend, en premier lieu, une unité 7 primaire de conditionnement thermique (ou chauffe), ayant au moins une paroi 8 rayonnante munie de sources 9 de rayonnement dans le domaine infrarouge du spectre électromagnétique, et plus précisément dans l'infrarouge proche, c'est-à-dire à des longueurs comprises entre 750 nm environ et 3000 nm environ.

En fonctionnement normal (c'est-à-dire en production de série), les préformes 3 sont introduites à température ambiante dans l'unité 7 primaire de chauffe par une entrée 10 de celle-ci (à droite sur la figure 1), par exemple au moyen d'une roue dentée. Puis les préformes 3 sont transportées au défilé dans l'unité 7 primaire de chauffe au moyen d'un convoyeur (par ex. équipé de supports appelés tournettes qui, au cours du défilement des préformes 3, entraînent celles-ci en rotation) pour y être chauffées par exposition au rayonnement infrarouge.

L'unité 7 primaire de chauffe peut comprendre une paroi 11 réfléchissante placée en regard de la paroi 8 rayonnante. La paroi 11 réfléchissante assure une réflexion au moins partielle du rayonnement infrarouge vers les préformes 3, ce qui accroît le rendement de l'unité 7 primaire de chauffe et permet d'en limiter la longueur.

Dans l'unité 7 primaire de chauffe, les deux parois 8, 11 en regard peuvent, le long du trajet des préformes 3, présenter des sections alternativement rayonnantes et réfléchissantes.

Les sources 9 de rayonnement sont reliées à une unité 12 de contrôle programmée non seulement pour commander l'allumage ou l'extinction des sources 9, mais également pour faire varier la puissance électrique fournie à chacune, selon un programme prédéfini correspondant à un profil thermique que l'on souhaite appliquer aux préformes 3.

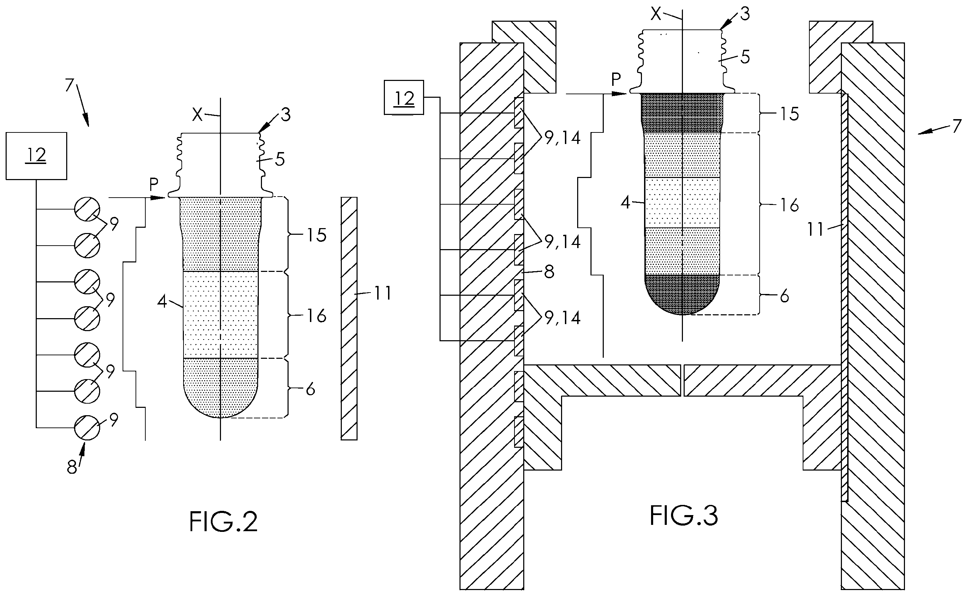

Selon un premier exemple de réalisation illustré sur la figure 2, les sources 9 sont des lampes halogènes, qui dans cet exemple sont superposées. Chaque préforme 3 peut être orientée col 5 en bas ou, comme illustré, col 5 en haut. Dans cette configuration, il est préférable de prévoir une circulation d'air forcée pour évacuer les calories qui, par convection, ont tendance à remonter vers le col 5, celui-ci devant être maintenu à une température voisine de la température ambiante pour conserver sa forme lors du formage du récipient 2.

Dans cette unité 7 de chauffe halogène, des sections absorbantes peuvent être prévues sur la paroi 11 réfléchissante, pour limiter localement, le long du trajet, la quantité de rayonnement reçu par les préformes 3 et ainsi réaliser une chauffe non uniforme de celles-ci autour de leur axe X. Une telle chauffe non uniforme est particulièrement avantageuse lorsque le récipient 2 à former est à section transversale non circulaire (par ex. polygonale ou ovale).

Selon un deuxième exemple de réalisation, illustré sur la figure 3, les sources 9 sont des lasers, par exemple des diodes, typiquement des diodes VCSEL (diodes laser à cavité verticale émettant par la surface).

La ou chaque paroi 8 rayonnante comprend par exemple une succession de modules 13 de chauffe chacun équipé de matrices 14 de diodes VCSEL (représentées schématiquement sur la figure 3), reliées à l'unité 12 de contrôle qui en commande la puissance émise.

Selon un mode de réalisation, des matrices 14 de diodes émettant à différentes longueurs d'onde peuvent être prévues (réparties verticalement au sein d'un même module 13 de chauffe ou horizontalement le long du trajet des préformes 3), de sorte à faire varier la quantité d'énergie absorbée par la préforme 3, dont l'absorptance varie en effet en fonction de la longueur d'onde.

Sur les figures 2 et 3, on a représenté une courbe typique illustrant les variations de la puissance d'émission, notée P, des lampes 9 (respectivement des diodes 9 laser). On voit que les lampes 9 (respectivement les diodes 9 laser) situées au droit d'une zone 15 du corps voisine du col 5 (« zone sous col ») et au droit du fond 6 (la zone 15 sous col et le fond 6 sont appelés à subir une déformation importante lors du formage du récipient 2 par soufflage) sont réglées à une puissance supérieure à celle des lampes 9 (respectivement des diodes 9 laser) situées au droit d'une zone 16 centrale du corps 4 (qui est appelée à subir une déformation comparativement moins importante lors du formage du récipient 2).

L'installation 1 comprend, en deuxième lieu, une unité 17 secondaire de conditionnement thermique (ou chauffe) vers laquelle chaque préforme 3 est transférée après être passée par l'unité 7 primaire de chauffe.

Le transfert de chaque préforme 3 de l'unité 7 primaire de chauffe vers l'unité 17 secondaire de chauffe peut être effectué au moyen d'une roue 18 de transfert, munie par exemple, comme illustré sur la figure 1, d'une série de pinces 19 élastiques aptes à saisir les préformes 3 au niveau du col 5.

L'unité 17 secondaire de chauffe comprend une série de postes 20 de chauffe à micro-ondes équipés chacun d'une cavité 21 propre à accueillir une préforme 3 et d'un générateur 22 d'ondes électromagnétiques dans le domaine des micro-ondes, couplé à la cavité 21 pour générer dans celle-ci un champ électromagnétique micro-ondes à une fréquence voisine de 2 450 MHz (ou 2,45 GHz).

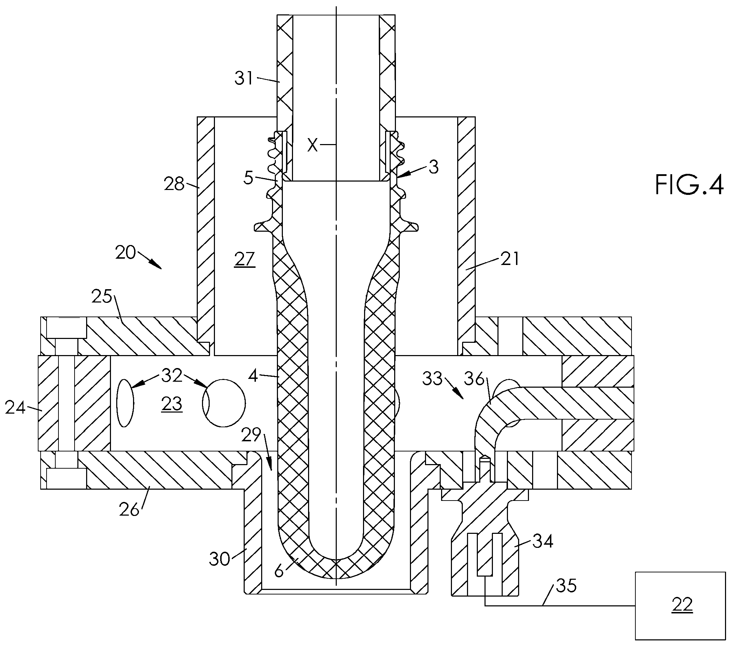

Selon un exemple de réalisation illustré sur la figure 4, la cavité 21, réalisée dans un matériau conducteur (par ex. en acier ou, de préférence, en aluminium ou dans un alliage d'aluminium) est cylindrique de révolution autour d'un axe central qui, lorsque la préforme 3 est positionnée dans la cavité 21, est confondu avec l'axe X principal de celle-ci.

Dans l'exemple illustré, la cavité 21 comprend une chambre 23 centrale cylindrique délimitée radialement par une ceinture 24 et, de part et d'autre axialement, par un couvercle 25 supérieur et un couvercle 26 inférieur annulaires fixés (par ex. par vissage) sur la ceinture 24. La cavité 21 comprend également une chambre 27 supérieure cylindrique délimitée par une jupe 28 supérieure tubulaire montée sur le couvercle 25 supérieur, et une chambre 29 inférieure cylindrique délimitée par une jupe 30 inférieure tubulaire montée sur le couvercle 26 inférieur à l'opposé de la jupe 28 supérieure. Les chambres 23, 27, 29 communiquent entre elles pour former un volume interne délimité extérieurement par la cavité 21 et dans lequel est destinée à être positionnée une préforme 3, comme illustré sur la figure 4. Comme on le voit sur cette figure, la préforme 3 est suspendue à un support 31, en l'espèce un manchon réalisé dans un matériau transparent aux micro-ondes, par ex. en polytétrafluoroéthylène (PTFE, disponible notamment sous la marque Téflon).

Selon un mode de réalisation illustré sur la figure 4, la ceinture 24 est percée d'une série périphérique d'ouvertures 32 radiales. La jupe 28 supérieure et la jupe 30 inférieure peuvent être respectivement fixées au couvercle 25 supérieur et au couvercle 26 inférieur par vissage ou par emmanchement à force.

Selon un mode préféré de réalisation, le générateur 22 de micro-ondes est un générateur dit à « état solide ».

L'expression « état solide », peu usitée en Français, est une traduction littérale de l'expression anglaise « solid state », employée couramment depuis des décennies dans le domaine de l'électronique, et plus particulièrement dans le domaine de l'ingénierie des radiofréquences, comme le montrent les ouvrages suivants : Herbert L. Kraus et al. « Solid State Radio Engineering », éd. John Wiley & Sons, 1980, Stephen F. Adam, « Microwave theory and applications », Englewood cliffs, 1969 Owen E. Maynard, « Solid State SPS Microwave Generation and Transmission Study », NASA Scientific and technical, 1980.

D'une manière générale, l'expression « état solide » caractérise un état de la matière dans lequel les atomes, les molécules ou les ions sont liés entre eux en sorte qu'en l'absence de contrainte mécanique ils sont fixes les uns par rapport aux autres. En électronique, l'expression « état solide » désigne les circuits fabriqués à l'aide de matériaux solides et dans lesquels les électrons ou autres charges porteuses d'un signal sont confinés dans ces matériaux. Aujourd'hui, ces circuits sont plus couramment appelés « circuits intégrés », ou « circuits à semiconducteurs », mais l'expression « état solide » est demeurée pour caractériser certains dispositifs électroniques complexes.

Ainsi, un générateur de micro-ondes à état solide désigne un dispositif de génération d'un signal électrique dans la gamme de fréquence des micro-ondes, dans lequel le signal est généré par un circuit intégré, par contraste avec les technologies plus anciennes (mais toujours employées) des tubes à vide (employés notamment dans les générateurs de type magnétron).

Des générateurs dits à « état solide » sont disponibles sous cette désignation dans le commerce, voir par ex. :
chez SAIREM, le générateur micro-onde à état solide de modèle GMS 200W, qui fournit un signal micro-onde à fréquence centrale de 2 450 MHz, réglable entre 2 430 et 2 470 MHz, pour une puissance de sortie maximale de 200 W ;
chez MKS, le générateur micro-onde à état solide de modèle SG 524, qui fournit un signal micro-onde à fréquence centrale de 2 450 MHz, réglable entre 2 400 et 2 500 MHz, pour une puissance de sortie maximale de 450 W.

Il n'entre pas dans le cadre du présent exposé de fournir une description précise d'un générateur de micro-ondes à état solide, puisque, comme nous venons de le voir, des modèles de tels générateurs existent dans le commerce et peuvent être intégrés sans adaptation particulière à la présente installation 1.

Le poste 20 de chauffe comprend en outre un dispositif 33 de couplage magnétique, qui comprend un connecteur 34 monté sur la cavité 21 (et plus précisément sur le couvercle 26 inférieur) et raccordé au générateur 22 par un câble 35 coaxial, et une antenne 36 réalisée dans un matériau métallique (par ex. en cuivre ou en aluminium), reliant en boucle le connecteur 34 à la cavité 21 (et plus précisément à la ceinture 24) pour assurer un couplage magnétique de la cavité 21 au générateur 22.

Le dispositif 33 de couplage permet la propagation des micro-ondes dans la cavité 21. Moyennant un ajustement temporaire de la fréquence d'émission des micro-ondes (cet ajustement est automatique dans les modèles précités de générateurs à état solide), il s'établit, dans le volume interne délimité par la cavité 21, un champ électrique micro-ondes stationnaire dans un mode résonant, qui présente au voisinage de l'axe central de la cavité (et donc au niveau du corps 4 de la préforme 3) une concentration locale d'énergie.

Ainsi soumis aux micro-ondes dans les conditions qui viennent d'être décrites, le corps 4 et le fond 6 de la préforme 3 (à l'exception du col 5) sont chauffés par effet d'hystérésis diélectrique. Ce phénomène est expliqué dans P. Lebaudy et al, « Conditionnement thermique par micro-ondes de préformes avant soufflage », in Récents Progrès en Génie des Procédés, Numéro 92, 2005 et dans A. Fahrat, « Vapo-Diffusion assistée par Micro-ondes : Conception, Optimisation et Application », Thèse de l'Université d'Avignon, Nov. 2010.

En résumé, les molécules du matériau diélectrique (ici le PET) présentent, en raison de leur dissymétrie, un moment dipolaire permanent et sont orientées de manière désordonnée en l'absence de champ électrique. En revanche, soumise à un champ électrique, les molécules tendent à s'orienter suivant les lignes de champ. Ce mouvement de rotation des molécules convertit l'énergie électrique en énergie cinétique, elle-même partiellement convertie en chaleur par frottement des molécules entre elles.

Dans la littérature (cf. notamment Fahrat, précité), la capacité de la matière à transformer l'énergie électromagnétique (micro-ondes) en chaleur est caractérisée par un paramètre, noté ε", dénommé « facteur de pertes diélectriques », exprimé en F.m<-1> (Faraday par mètre). Il a été démontré que, pour certaines matières plastiques et en particulier pour le PET, le facteur de pertes diélectriques ε" varie en fonction de la température. Plus précisément, pour le PET, ε" est croissant avec la température lorsque celle-ci est comprise entre un minimum de 20°C (soit la température ambiante moyenne dans les ateliers de production aux latitudes européennes) et un maximum de 120°C environ (inférieur à la température de cristallisation).

On comprend par conséquent que le matériau est d'autant plus apte à transformer l'énergie électromagnétique micro-ondes en chaleur que sa température est élevée. En d'autres termes, dans un matériau présentant initialement (c'est-à-dire avant l'exposition aux micro-ondes) des zones de températures différentes, l'exposition de ce matériau aux micro-ondes provoque une amplification des différences de températures entre ces zones, en raison d'une vitesse de chauffe plus élevée pour les zones initialement plus chaudes que pour les zones initialement plus froides.

Ce phénomène d'amplification peut être exploité avec succès dans la fabrication des récipients 2 en chauffant les préformes 3 en deux phases successives :
une phase de préchauffe lors de laquelle chaque préforme 3 est soumise, dans l'unité 7 primaire de chauffe, à un rayonnement électromagnétique dans le domaine de l'infrarouge ;
une phase de chauffe lors de laquelle chaque préforme 3 ainsi préchauffée est soumise ensuite, dans l'unité 17 secondaire de chauffe, à un rayonnement électromagnétique dans le domaine des micro-ondes.

Plus précisément, lors de la phase de préchauffe, le rayonnement infrarouge présente une puissance et/ou une longueur d'onde variable axialement c'est-à-dire le long de l'axe X principal de la préforme 3 et/ou angulairement autour de l'axe X. Dans les exemples illustrés sur les figures, on a illustré une chauffe dans laquelle la puissance émise par les sources 9 (et donc la température de la préforme 3) varie axialement, le long de l'axe X.

De la sorte, à l'issue de la phase de préchauffe, chaque préforme présente au moins une zone dite froide portée à une température T1 (en gris clair sur les figures 2 et 3 ) et au moins une zone dite chaude portée à une température T2 strictement supérieure à T1 (en gris plus foncé sur les figures 2 et 3).

Dans les exemples de figures 2 et 3, la zone 15 sous col et le fond 6, destinés à subir une déformation importante lors du formage, sont des zones chaudes, tandis que la zone 16 centrale du corps 4 est une zone froide.

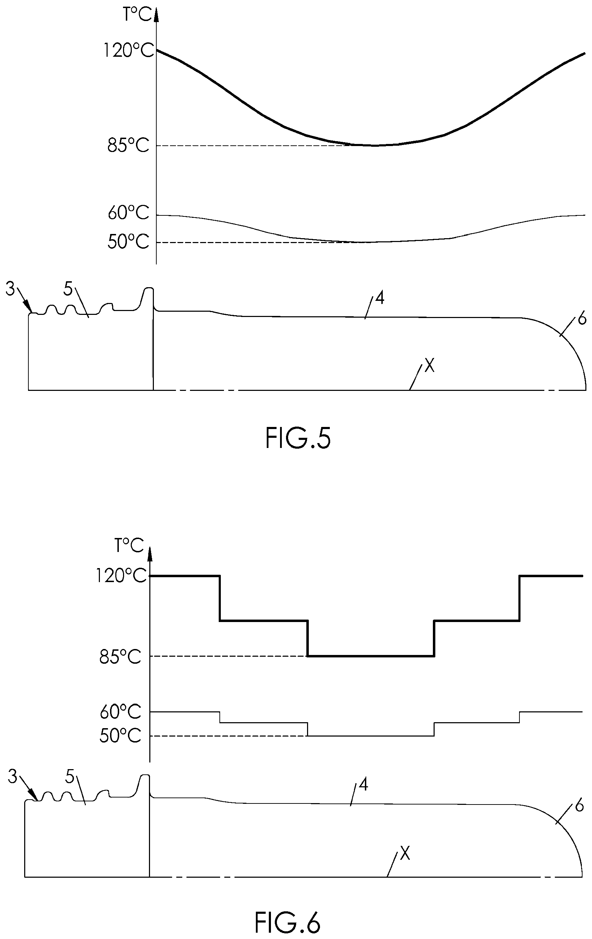

Dans une unité 7 de chauffe à lampes 9 halogène, où ces lampes 9 rayonnent sur un large spectre et de manière multidirectionnelle, le profil de température de la préforme 3 (visible en trait fin sur le tracé de la figure 5) à la sortie de l'unité 7 primaire de chauffe ne correspond pas exactement au profil de puissance des lampes 9 (visible sur la figure 2), car les différents rayonnements issus des lampes 9 se chevauchent. Il en résulte des différences de températures relativement douces, même si les maxima et les minima sont bien différenciés.

En revanche, dans une unité 7 de chauffe laser, où les matrices 14 de diodes VCSEL rayonnent de manière monochromatique ou quasi-monochromatique et de manière plus focalisée, le profil de température de la préforme 3 (visible en trait fin sur le tracé de la figure 6 ) à la sortie de l'unité 7 de chauffe correspond à peu près au profil de puissance des matrices 14 de diodes (visible sur la figure 3 ), car les rayonnements des différentes matrices 14 de diodes se chevauchent peu.

Les différences de températures entre la (les) zone(s) 16 froide(s) et la (les) zone(s) chaude(s) 6, 15 pourraient rapidement s'estomper si, à la sortie de l'unité 7 primaire de chauffe, les préformes 3 étaient temporairement laissées au repos. Mais les préformes 3 sont immédiatement transférées vers l'unité 17 secondaire de chauffe pour être exposées aux micro-ondes.

Le profil de puissance appliqué aux sources 9 infrarouge de l'unité 7 primaire de chauffe (lampes ou laser) et le temps d'exposition des préformes 3 dans l'unité 7 primaire de chauffe sont réglés pour que la différence de température entre la (les) zone(s) 16 froide(s) et la (les) zone(s) 6, 15 chaude(s) à l'issue de la chauffe soit supérieure ou égale à 5°C environ, et de préférence supérieure ou égale à 10°C environ. Toutefois, cette différence de température est avantageusement inférieure ou égale à 20°C environ.

En outre, il est avantageux que le profil de puissance appliqué aux sources 9 infrarouge de l'unité 7 primaire de chauffe (lampes ou laser) et le temps d'exposition des préformes 3 dans l'unité 7 primaire de chauffe soient réglés pour qu'à la sortie de la phase de préchauffe - et donc à l'initiation de la phase de chauffe - chaque préforme 3 présente, en tout point (dans la (les) zone(s) 16 froide(s) comme dans la (les) zone(s) 6, 15 chaude(s)), une température inférieure à la température de transition vitreuse de la matière plastique dont est constituée la préforme 3. Rappelons que la température de transition vitreuse du PET est de 80°C environ.

Il a en effet été constaté que, dans ces conditions, la chauffe micro-ondes est plus efficace. D'un point de vue physique, cette efficacité peut s'expliquer par le fait que, en deçà de la température de transition vitreuse, la matière conserve sa structure moléculaire, la préforme 3 conservant donc ses dimensions. A contrario, préchauffer par infrarouge la préforme 3 à une température au moins localement supérieure à la température de transition vitreuse conduirait à une relaxation au moins partielle des contraintes internes au matériau, et des changements dimensionnels dans la préforme 3 qui affecteraient la répartition énergétique des micro-ondes dans la cavité 21, réglée pour une préforme 3 dont les dimensions sont celles, invariables, d'une préforme brute d'injection.

Plus précisément, il est préférable de régler le profil de puissance appliqué aux sources 9 infrarouge et le temps d'exposition des préformes 3 dans l'unité 7 primaire de chauffe pour que, à la fin de la phase de préchauffe (c'est-à-dire à la sortie de l'unité 7 primaire de chauffe, et à l'entrée de l'unité 17 secondaire de chauffe) : 20 ° C < T 1 < T 2 ≤ 60 ° C.

On a illustré sur les figures 5 et 6 deux exemples de chauffe (respectivement halogène et laser) dans lesquels, à la fin de la phase de préchauffe, la (ou les) zone(s) 16 froide(s) a (ont) une température T1 d'environ 50°C et la (ou les) zone(s) 6, 15 chaude(s) une température T2 d'environ 60°C.

La phase de chauffe (conduite dans la cavité 21 à micro-ondes) est conduite à une puissance et pendant un temps d'exposition tel que la (les) zone(s) 16 froide(s) - centre du corps 4 notamment - soi(en)t portée(s) à une température supérieure à la température de transition vitreuse (soit environ 85°C dans les exemples illustrés), et que la (les) zone(s) 6, 15 chaude(s) - fond 6 et zone 15 sous col - soi(en)t portée(s) à une température à la fois supérieure à la température de transition vitreuse et inférieure à la température de cristallisation (soit environ 120°C dans les exemples illustrés). A partir de la température de cristallisation, le matériau perd sa transparence et devient progressivement opaque. Le PET, typiquement, blanchit.

On voit dans l'exemple illustré que la (les) zone(s) 6, 15 chaude(s) qui, à la fin de la phase de préchauffe (infrarouge) est (sont) à une température de 60°C environ, se trouve(nt) pendant la phase de chauffe (micro-ondes) portée(s) à 120°C environ, soit une augmentation de température de 60°C, tandis que la (les) zone(s) 16 froide(s) qui, à la fin de la phase de préchauffe, est à une température de 50°C environ, se trouve pendant la phase de chauffe portée à 85°C environ, soit une augmentation de température de 35°C seulement, ce qui illustre le phénomène d'amplification procuré par les micro-ondes.

Il est avantageux que l'unité 7 primaire de chauffe soit équipée de lasers, car la chauffe laser est plus précise que la chauffe halogène. Cette précision est conservée dans l'unité 17 secondaire de chauffe, comme on le voit par comparaison des courbes en trait épais des figures 5 et 6.

Le générateur 22 à état solide, outre qu'il offre des avantages intrinsèques par comparaison avec un magnétron (possibilité d'ajuster la fréquence de manière automatique pour s'accorder avec la cavité 21, possibilité d'ajuster la puissance émise et de minimiser la puissance réfléchie par la cavité 21, stabilité du signal de sortie notamment), permet d'employer une cavité 21 à mode de résonance unique (ou monomode), autorisant de maximiser la puissance d'émission des micro-ondes et donc la vitesse de chauffe. Cette rapidité ne laisse pas aux différentes zones chaudes et froides le temps de retrouver un équilibre thermique. En d'autres termes, les différences de température entre les zones froides et les zones chaudes sont maintenues, et même accrues au cours de la phase de chauffe en raison de l'effet d'amplification induit par les micro-ondes.

Bien que réalisée en deux phases successives, la chauffe des préformes 3 présente une efficacité accrue, ce qui accroît le rendement énergétique (et minimise l'énergie électrique consommée), et permet d'accélérer les cadences de production des récipients 2.

In fine, à la fin de la phase de chauffe, les zones froides et les zones chaudes de la préforme 3 sont bien différenciées, au bénéfice de la soufflabilité du récipient 2 (c'est-à-dire sa capacité à être correctement mis en forme par soufflage).

Comme on le voit sur la figure 1, l'installation 1 comprend une unité 37 de formage incluant une série de postes 38 de formage équipés chacun d'un moule 39 à l'empreinte du récipient 2. L'unité 37 de formage est par exemple rotative, et comprend dans ce cas un carrousel 40 tournant sur lequel sont montés des moules 39 de type portefeuille, qui s'ouvrent pour permettre l'introduction d'une préforme 3 ayant subi une préchauffe suivie d'une chauffe, et l'évacuation d'un récipient 2 formé, et se ferment pour permettre le soufflage du récipient 2 et son formage par application contre l'empreinte du moule 39.

Un dispositif 41 de transfert (par ex. une roue pourvue de pinces 19 élastiques) assure l'évacuation des préformes 3 chaudes de l'unité 17 secondaire de chauffe et le chargement de chacune de ces préformes 3 dans un moule 39. Sur la figure 1, des flèches illustrent le sens de déplacement des préformes 3 dans l'installation 1. La vue est schématique ; l'échelle n'est pas nécessairement respectée. En particulier, afin d'avoir un aperçu global de l'installation 1, l'unité 7 primaire de chauffe a été raccourcie et le nombre de poste 20 de chauffe micro-ondes, de moules 39 ou de pinces 19 sur les roues 18, 41 de transfert a été limité.

A la sortie de l'unité 37 de formage, les récipients 2 sont remplis, bouchés, étiquetés et, le cas échéant, groupés en packs et mis sous film avant d'être palettisés en vue d'être expédiés.

## Revendications

1. Procédé de chauffe d'une ébauche **(3)** de récipient en matière plastique qui s'étend suivant un axe (X) principal, ce procédé comprenant :
- une phase de préchauffe utilisant des sources **(9)** de rayonnement électromagnétique dans le domaine de l'infrarouge et une unité **(12)** de contrôle programmée non seulement pour commander un allumage et une extinction desdites sources **(9)** mais également pour faire varier une puissance électrique fournie à chacune des sources selon un profil thermique souhaité, phase lors de laquelle l'ébauche **(3)** est soumise audit rayonnement électromagnétique dans le domaine de l'infrarouge ;
- une phase de chauffe lors de laquelle l'ébauche **(3)** est soumise ensuite à un rayonnement électromagnétique dans le domaine des micro-ondes ;
ce procédé étant **caractérisé en ce que,** lors de la phase de préchauffe, le rayonnement infrarouge présente une puissance et/ou une longueur d'onde variable le long de l'axe (X) principal de l'ébauche **(3)** et/ou autour de cet axe (X), en sorte qu'à l'issue de la phase de préchauffe la préforme **(3)** présente au moins une zone **(16)** dite froide portée à une température T1 et au moins une zone **(6, 15)** dite chaude portée à une température T2 strictement supérieure à T1.

2. Procédé selon la revendication 1, **caractérisé en ce que** la phase de préchauffe est réglée pour qu'à l'initiation de la phase de chauffe l'ébauche **(3)** présentent en tout point une température inférieure à la température de transition vitreuse de la matière plastique.

3. Procédé selon la revendication 1 ou la revendication 2, **caractérisé en ce que,** à la fin de la phase de préchauffe, la différence de température entre la (ou chaque) zone **(16)** froide et la (ou chaque) zone **(6, 15)** chaude est inférieure ou égale à 20°C.

4. Procédé selon l'une des revendications précédentes, **caractérisé en ce que,** à la fin de la phase de préchauffe, la différence de température entre la (ou chaque) zone **(16)** froide et la (ou chaque) zone **(6, 15)** chaude est supérieure ou égale à 5°C.

5. Procédé selon l'une des revendications précédentes, **caractérisé en ce que** à la fin de la phase de préchauffe, la différence de température entre la (ou chaque) zone **(16)** froide et la (ou chaque) zone **(6, 15)** chaude est supérieure ou égale à 10°C.

6. Procédé selon la revendication 3, **caractérisé en ce que** la température T2 de la (ou chaque) zone **(6, 15)** chaude est inférieure ou égale à 60°C.

7. Procédé selon l'une des revendications précédentes, **caractérisé en ce que** le rayonnement infrarouge est un rayonnement laser.

8. Procédé selon la revendication 7, **caractérisé en ce que** le rayonnement infrarouge est généré par des diodes VCSEL.

9. Procédé selon l'une des revendications précédentes, **caractérisé en ce que** les micro-ondes sont produites par un générateur **(22)** à état solide.

## Patentansprüche

1. Verfahren zum Erwärmen eines Behälterrohlings (3) aus Kunststoff, der sich gemäß einer Hauptachse (X) erstreckt, wobei dieses Verfahren enthält:
- eine Vorwärmphase unter Verwendung von Quellen (9) elektromagnetischer Strahlung im Infrarotbereich und einer Steuereinheit (12), die nicht nur dazu programmiert ist, ein Einschalten und ein Ausschalten der Quellen (9) zu steuern, sondern auch dazu, eine jeder der Quellen bereitgestellte elektrische Leistung gemäß einem gewünschten thermischen Profil variieren zu lassen, wobei der Rohling (3) während der Phase der elektromagnetischen Strahlung im Infrarotbereich ausgesetzt wird;
- eine Erwärmungsphase, während der der Rohling (3) anschließend einer elektromagnetischen Strahlung im Mikrowellenbereich ausgesetzt wird;
wobei dieses Verfahren **dadurch gekennzeichnet ist, dass** während der Vorwärmphase die Infrarotstrahlung eine variable Leistung und/oder Wellenlänge entlang der Hauptachse (X) des Rohlings (3) und/oder um diese Achse (X) aufweist, so dass am Ende der Vorwärmphase die Vorform (3) mindestens einen so genannten kalten Bereich (16), der auf eine Temperatur T1 gebracht wurde, und mindestens einen so genannten warmen Bereich (6, 15) aufweist, der auf eine Temperatur T2 strikt höher als T1 gebracht wurde.

2. Verfahren nach Anspruch 1, **dadurch gekennzeichnet, dass** die Vorwärmphase so eingestellt wird, dass beim Start der Erwärmungsphase der Rohling (3) an jedem Punkt eine Temperatur niedriger als die Glasübergangstemperatur des Kunststoffs aufweist.

3. Verfahren nach Anspruch 1 oder Anspruch 2, **dadurch gekennzeichnet, dass** am Ende der Vorwärmphase die Temperaturdifferenz zwischen dem (oder jedem) kalten Bereich (16) und dem (oder jedem) warmen Bereich niedriger als oder gleich 20°C ist.

4. Verfahren nach einem der vorhergehenden Ansprüche, **dadurch gekennzeichnet, dass** am Ende der Vorwärmphase die Temperaturdifferenz zwischen dem (oder jedem) kalten Bereich (16) und dem (oder jedem) warmen Bereich (6, 15) höher als oder gleich 5° C ist.

5. Verfahren nach einem der vorhergehenden Ansprüche, **dadurch gekennzeichnet, dass** am Ende der Vorwärmphase die Temperaturdifferenz zwischen dem (oder jedem) kalten Bereich (16) und dem (oder jedem) warmen Bereich (6, 15) größer als oder gleich 10°C ist.

6. Verfahren nach Anspruch 3, **dadurch gekennzeichnet, dass** die Temperatur T2 des (oder jedes) warmen Bereichs (6, 15) niedriger als oder gleich 60°C ist.

7. Verfahren nach einem der vorhergehenden Ansprüche, **dadurch gekennzeichnet, dass** die Infrarotstrahlung einer Laserstrahlung ist.

8. Verfahren nach Anspruch 7, **dadurch gekennzeichnet, dass** die Infrarotstrahlung von VCSEL-Dioden erzeugt wird.

9. Verfahren nach einem der vorhergehenden Ansprüche, **dadurch gekennzeichnet, dass** die Mikrowellen von einem Festkörper-Generator (22) erzeugt werden.

## Claims

1. Method for heating a plastic container parison (3) which extends along main axis (X), this method comprising:
- a preheating phase using sources (9) of electromagnetic radiation in the infrared domain and a control unit (12) programmed not only to command the switching-on and switching-off of said sources (9), but also to vary the electrical power supplied to each of the sources according to a desired thermal profile, during which phase the parison (3) is subjected to said electromagnetic radiation in the infrared domain;
- a heating phase during which the parison (3) is then subjected to electromagnetic radiation in the microwave domain;
this method being **characterized in that**, during the preheating phase, the infrared radiation has a power and/or a wavelength that is able to vary along the main axis (X) of the parison (3) and/or around this axis (X), so that on completion of the preheating phase, the preform (3) has at least one so-called cold zone (16) raised to a temperature T1 and at least one so-called hot zone (6, 15) raised to a temperature T2 strictly higher than T1.

2. Method according to Claim 1, **characterized in that** the preheating phase is regulated so that at the start of the heating phase, the parison (3) at all points has a temperature lower than the glass transition temperature of the plastic.

3. Method according to Claim 1 or Claim 2, **characterized in that**, at the end of the preheating phase, the difference in temperature between the (or each) cold zone (16) and the (or each) hot zone (6, 15) is less than or equal to 20°C.

4. Method according to one of the preceding claims, **characterized in that**, at the end of the preheating phase, the difference in temperature between the (or each) cold zone (16) and the (or each) hot zone (6, 15) is greater than or equal to 5°C.

5. Method according to one of the preceding claims, **characterized in that** at the end of the preheating phase, the difference in temperature between the (or each) cold zone (16) and the (or each) hot zone (6, 15) is greater than or equal to 10°C.

6. Method according to Claim 3, **characterized in that** the temperature T2 of the (or each) hot zone (6, 15) is less than or equal to 60°C.

7. Method according to one of the preceding claims, **characterized in that** the infrared radiation is a laser radiation.

8. Method according to Claim 7, **characterized in that** the infrared radiation is generated by VCSEL diodes.

9. Method according to one of the preceding claims, **characterized in that** the microwaves are produced by a solid state generator (22).
